# EUROPEAN PATENT APPLICATION

(11) **EP 3 081 966 A1**
(43) Date of publication of application: **19.10.2016**
(21) Application number: 14870059.4
(22) Date of filing: 12.12.2014
(51) Int. Cl.: G02B 1/04, C08G 18/38, C08L 75/04, G02C 7/10

(54) **POLYMERIZABLE COMPOSITION FOR OPTICAL MATERIALS, OPTICAL MATERIAL AND METHOD FOR PRODUCING SAME**

(30) Priority: 13.12.2013 JP 2013258501; 27.02.2014 WO PCT/JP2014/054971; 26.08.2014 JP 2014171788
(71) Applicant: Mitsui Chemicals, Inc., Tokyo 105-7117 (JP)
(72) Inventor: KAKINUMA Naoyuki, Omuta-shi Fukuoka 836-8610 (JP); HASHIMOTO Toshiya, Sodegaura-shi Chiba 299-0265 (JP); KOJIMA Kouya, Sodegaura-shi Chiba 299-0265 (JP)
(74) Representative: Wills, Andrew Jonathan
(86) International application number: PCT/JP2014/083014
(87) International publication number: WO 2015/088013

(57) **Abstract**

There is provided a polymerizable composition for optical materials including polyisocyanate (A), polythiol (B), an acidic phosphoric ester (C) represented by the following General Formula (1), and one or more kinds of ultraviolet absorbers (D) having a maximum absorption peak in a range of 350 nm to 370 nm, in which in a case where the total molar number of isocyanate groups in the polyisocyanate (A) is 100 mol%, a secondary isocyanate group is included in 20 mol% or more and the acidic phosphoric ester (C) is included in an amount of 100 ppm to 700 ppm with respect to the total weight of the polyisocyanate (A) and the polythiol (B).

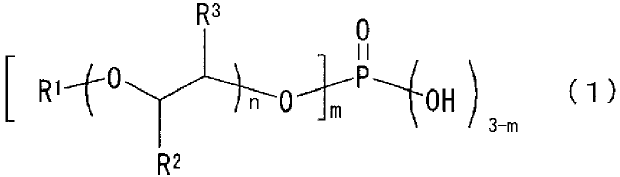

## Description

### TECHNICAL FIELD

The present invention relates to a polymerizable composition for optical materials that supplies a polythiourethane molded product, an optical material obtained by using the composition, and a process for producing the same.

### BACKGROUND ART

Since plastic lenses are light, not easily cracked, and can be stained in comparison to inorganic lenses, plastic lenses have been rapidly distributed as optical elements such as eyeglass lenses and camera lenses, and hitherto, a variety of resins for eyeglass lenses have been developed and used. Among these, representative examples include an allyl resin obtained from diethylene glycol bisallyl carbonate and diallyl isophthalate, a (meth)acrylic resin obtained from (meth)acrylate, and a polythiourethane resin obtained from isocyanate and thiol. Among these, the polythiourethane resin is suitable for obtaining a plastic lens having high transparency, a high refractive index, low dispersion, and is optimal for a plastic lens excellent in impact resistance, stainability, and workability.

The polythiourethane resin plastic lens is produced by a method of cast-polymerizing an isocyanate compound, a thiol compound, and the like in a glass mold. In the case of cast polymerization in a glass mold, a release agent is essential. As the method of using the release agent, a method in which an external mold release agent is applied to the mold in advance and a method in which an internal mold release agent is added into the polymerization monomer are exemplified. From the viewpoint of productivity and the quality of the manufactured plastic lens, internal mold release agents such as an acidic phosphoric ester are widely used.

Patent Document 1 discloses that a method for producing a resin for a thiourethane-based optical material, which includes a step of preparing a resin composition containing a polyisocyanate compound and a polythiol compound under predetermined conditions and a step of cast-polymerizing the obtained resin composition. It is described that about 1000 ppm of an acidic phosphoric ester, as an internal mold release agent, is added to a polymerization monomer to release the thiourethane-based molded product.

Patent Documents 2 and 3 discloses that a process for producing external mold release agents and a process for producing a plastic lens using these external mold release agents is described.

In addition, in the related art, the adverse effects due to exposure of the eye to ultraviolet rays have been an issue. Furthermore, in recent years, effects on the eye such as eye strain or pain by blue light included in light emitted from natural light, liquid crystal displays of office equipment, or displays of portable devices such as a smart phone or a mobile phone have been an issue, and thus, it is required to reduce the amount at which the eye is exposed to light from ultraviolet rays to blue light which has a relatively short wavelength of about 420 nm.

The effects of short wavelength blue lights having a wavelength of about 420 nm on the eye are described in Non-Patent Document 1. In this document, damage of retinal retina cells (cultured retinal retina R28 cells of a rat) due to irradiation with blue LED light having different peak wavelengths of 411 nm and 470 nm is verified. As a result, while irradiation (4.5 W/m²) with blue light having a peak wavelength of 411 nm causes cell death of retinal retina cells within 24 hours, in blue light having a peak wavelength of 470 nm, it is shown that changes in the cells do not occur even in the case of the same amount of irradiation, and it is shown that it is important to suppress the exposure of light having a wavelength of 400 nm to 420 nm to prevent eye disability.

In addition, there is concern that eye strain or stress occurs due to exposure of irradiation with blue light to the eye for a long period of time, and this is considered to be a factor that causes age-related macular degeneration.

In Patent Document 4, it is disclosed that, by addition of an ultraviolet absorber, the average light transmittance in a region of 300 nm to 400 nm is suppressed.

In Patent Document 5, it is disclosed that at least two kinds of ultraviolet absorbers having different maximum absorption wavelengths are contained. In Patent Document 6, a plastic lens in which yellowing or refractive-index change of a lens by addition of an ultraviolet absorber does not occur and the mechanical strength of a lens does not decrease is disclosed.

Patent Document 7 discloses that ultraviolet transmittance of a plastic lens having a thickness of 1.1 mm containing a benzotriazole derivative as an ultraviolet absorber at 400 nm or less. Patent Document 8 discloses that a resin composition including a thermoplastic resin, an ultraviolet absorber, and iron oxide fine particles.

### RELATED DOCUMENT

### PATENT DOCUMENT

[Patent Document 1] PCT Japanese Translation Patent Publication No. 2014-508207
[Patent Document 2] Japanese Unexamined Patent Publication No. 08-120178
[Patent Document 3] Japanese Unexamined Patent Publication No. 2010-234563
[Patent Document 4] Japanese Unexamined Patent Publication No. 10-186291
[Patent Document 5] Japanese Unexamined Patent Publication No. 11-218602
[Patent Document 6] Japanese Unexamined Patent Publication No. 11-295502
[Patent Document 7] Japanese Unexamined Patent Publication No. 2000-147201
[Patent Document 8] Pamphlet of International Publication No. WO2006/087880

### NON-PATENT DOCUMENT

[Non-Patent Document 1] The European journal of neuroscience, vol. 34, Iss. 4, 548-58, (2011)

### SUMMARY OF THE INVENTION

The techniques described in the above-described Patent Documents have points to be improved in the following respects.

In a case where an external mold release agent is used as described in Patent Documents 2 and 3, the external mold release agent is required to be applied to the inner surface of the mold each time of molding, and thus, the productivity of the molded product is reduced. The external mold release agent is attached to the molded product surface, and due to this, unevenness on the molded product surface occurs, or when the surface of the molded product is painted or the molded product is stained, paint failure or staining failure occurs, and thus, a desired product can not be obtained. Furthermore, there is a problem in appearance in that turbidity occurs in the transparent resin molded product.

In a case where an internal mold release agent is used as described in Patent Document 1, when the addition amount described in the document is used, the releasability is sufficient, but the transparency of the obtained molded product is decreased in some cases.

On the other hand, in a case where the amount of acidic phosphoric ester is reduced, the transparency of the molded product is improved, but the releasability from the mold is decreased, and due to this, breakage or the like in the molded product is observed in some cases. In particular, in a case where the power is increased by reduction of the curvature radius of the lens, that is, in a case where the curvature of the lens surface is great, the releasability tends to be decreased. Since releasability deterioration is also directly connected to a defect such as damage of a glass mold and a molded product itself, the releasability deterioration significantly affects the productivity.

Thus, in a case where an internal mold release agent is used, improvement of the productivity by improving the releasability of the molded product and improvement of the yield of the molded product by improving the transparency are in a trade-off relationship. Therefore, a material of which the transparency of a molded product is improved, while having sufficient releasability, is demanded.

On the other hand, in the plastic lens of Patent Document 6, the spectral transmittance at 400 nm is described, but the light transmittance at each of 420 nm and 440 nm is not described.

In the technique described in Patent Document 7, in the case of intending to cut a low wavelength region of 400 nm to 420 nm using an ultraviolet absorber, depending on the kind of the ultraviolet absorber, yellowing of a resin occurs, or the ultraviolet absorber is not dissolved in a composition for optical materials and precipitated, and thus, the resin becomes clouded in some cases.

In the technique described in Patent Document 8, iron oxide fine particles are added, and a molded product is colored in some cases. In the fields where transparency is required as an eyeglass lens, there is a problem in appearance. In addition, polycarbonate resins have been used as a transparent thermoplastic resin, and there is room for improvement in optical properties such as a refractive index and Abbe number.

Thus, a material which has an improved shielding effect against harmful light from ultraviolet rays to blue light having a wavelength of about 420 nm and an excellent colorless and transparent appearance is demanded.

The inventors performed intensive studies in order to solve the above-described problems. As a result, they found that, in a case where the total molar number of isocyanate groups in the polyisocyanate (A) is 100 mol%, by using polyisocyanate including 20 mol% or more of a secondary isocyanate group, it is possible to use a small amount of acidic phosphoric ester which is an internal mold release agent, transparency of a molded product are improved, and a molded product having excellent releasability can be obtained.

Furthermore, in addition to the above configuration, they also found that, by using one or more kinds of ultraviolet absorbers having a maximum absorption peak in a predetermined range, a molded product which has a high shielding effect against harmful light from ultraviolet rays to blue light having a wavelength of about 420 nm, and has an excellent colorless and transparent appearance is obtained.

That is, the present invention is as follows.
[1] A polymerizable composition for optical materials including polyisocyanate (A), polythiol (B), acidic phosphoric ester (C) represented by the following General Formula (1), and ultraviolet absorber (D) comprised of at least one kind of ultraviolet absorbers having a maximum absorption peak in a range of 350 nm to 370 nm, in which, in a case where the total molar number of isocyanate groups in the polyisocyanate (A) is 100 mol%, a secondary isocyanate group is included in 20 mol% or more and the acidic phosphoric ester (C) is included in an amount of 100 ppm to 700 ppm with respect to the total weight of the polyisocyanate (A) and the polythiol (B). 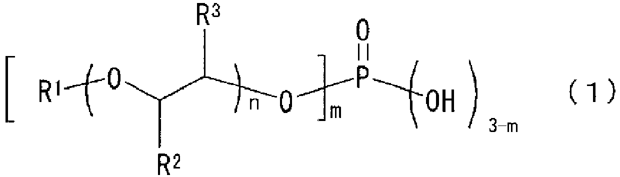 In the formula, m represents an integer of 1 or 2, n represents an integer of 0 to 18, R¹ represents an alkyl group having 1 to 20 carbon atoms, and each of R² and R³ independently represents a hydrogen atom, a methyl group, or an ethyl group.
[2] The polymerizable composition for optical materials according to [1], in which the ultraviolet absorber (D) is one kind selected from benzotriazole-based compounds.
[3] The polymerizable composition for optical materials according to [2], in which the benzotriazole-based compound is one kind selected from chloro-substituted benzotriazole-based compounds.
[4] The polymerizable composition for optical materials according to [3], in which the chloro-substituted benzotriazole-based compound is 2-(2-hydroxy-3-t-butyl-5-methylphenyl)-chlorobenzotriazole.
[5] The polymerizable composition for optical materials according to any one of [1] to [4], in which 0.1% by weight to 1.5% by weight of the ultraviolet absorber (D) is included in 100% by weight of the polymerizable composition for optical materials.
[6] The polymerizable composition for optical materials according to any one of [1] to [5], in which the polyisocyanate (A) includes at least one kind selected from bis (4-isocyanatocyclohexyl) methane and isophorone diisocyanate.
[7] The polymerizable composition for optical materials according to any one of [1] to [6], in which the polythiol (B) is at least one kind selected from pentaerythritol tetrakis(2-mercaptoacetate), pentaerythritol tetrakis(3-mercaptopropionate), bis(mercaptoethyl) sulfide, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 2,5-mercaptomethyl-1,4-dithiane, 1,1,3,3-tetrakis(mercaptomethylthio) propane, 4,6-bis(mercaptomethylthio)-1,3-dithiane, 2-(2,2-bis(mercaptomethylthio)ethyl)-1,3-dithietane, and ethylene glycol bis(3-mercaptopropionate).
[8] A molded product obtained by curing the polymerizable composition for optical materials according to any one of [1] to [7].
[9] An optical material comprised of the molded product according to [8].
[10] The optical material according to [9], in which the light transmittance thereof measured at a thickness of 2 mm satisfies the following characteristics (1) to (3);
   (1) the light transmittance at a wavelength of 410 nm is 10% or less,
   (2) the light transmittance at a wavelength of 420 nm is 70% or less, and
   (3) the light transmittance at a wavelength of 440 nm is 80% or more.
[11] A plastic eyeglass lens comprised of the optical material according to [9] or [10].
[12] The plastic eyeglass lens according to [11], in which the curvature radius R of at least one surface thereof satisfies the range of 30 mm ≤ R ≤ 100 mm.
[13] A process for producing optical materials including a step of cast-polymerizing the polymerizable composition for optical materials according to any one of [1] to [7].
[14] A process for producing a plastic eyeglass lens, in which a lens casting mold comprised of a first mold having a first surface for forming one side of the plastic eyeglass lens, a second mold having a second surface for forming the other surface, and a material for forming cavity for fixing the first mold and the second mold so as to face these surfaces each other is used, the process comprising: a step of injecting the polymerizable composition for optical materials according to any one of [1] to [7] into the cavity surrounded by the first surface, the second surface, and the cavity and a step of polymerizing and curing the polymerizable composition for optical materials in the cavity,
   in which the curvature radius R of at least one surface of the first surface and the second surface satisfies the range of 30 mm ≤ R ≤ 100 mm.

In the polymerizable composition for optical materials of the present invention, by using polyisocyanate including a predetermined amount of a secondary isocyanate group, the amount of an acidic phosphoric ester added can be an amount at which the transparency of a molded product is improved and the releasability is excellent. Furthermore, in addition to the above configuration, by using a predetermined ultraviolet absorber, it is possible to provide an optical material that light in a low wavelength region of 400 nm to 420 nm can be selectively absorbed, and shielding effect against blue light is improved.

That is, according to the polymerizable composition for optical materials of the present invention, the transparency of a molded product is improved, the yield is excellent, damage of a glass mold and a molded product itself is suppressed by improvement of the releasability, thus, the productivity becomes excellent, and disorders such as eye strain or stress can also be suppresses by reduction of the effects of harmful light on the eye, and thus, the composition can be suitably used as, in particular, a plastic eyeglass lens.

### BRIEF DESCRIPTION OF THE DRAWINGS

The above-described objects, other objects, features, and advantages will be made clearer from the preferred embodiments described below, and the following accompanying drawings.

FIG. 1 is a sectional view schematically showing a plastic lens according to an embodiment.
FIG. 2 is a sectional view schematically showing a lens casting mold according to the embodiment.

### DESCRIPTION OF EMBODIMENTS

Hereinafter, an embodiment of the present invention will be described with reference to drawings. In addition, in all of the drawings, the same reference numerals are given to the same constituent elements, and description thereof will not be repeated.

The polymerizable composition for optical materials of the present embodiment is formed by including polyisocyanate (A), polythiol (B), an acidic phosphoric ester (C) represented by the following General Formula (1), and one or more kinds of ultraviolet absorbers (D) having a maximum absorption peak in a range of 350 nm to 370 nm.

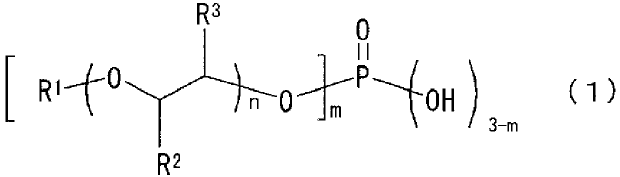

In the formula, m represents an integer of 1 or 2, n represents an integer of 0 to 18, R¹ represents an alkyl group having 1 to 20 carbon atoms, and each of R² and R³ independently represents a hydrogen atom, a methyl group, or an ethyl group.

In a case where the total molar number of entire isocyanate groups in the polyisocyanate (A) is 100 mol%, a secondary isocyanate group is included in 20 mol% or more and the acidic phosphoric ester (C) is included in an amount of 100 ppm to 700 ppm with respect to the total weight of the polyisocyanate (A) and the polythiol (B).

### [Polyisocyanate (A)]

The polyisocyanate (A) is an isocyanate having two or more isocyanate groups, and in a case where the total molar number of entire isocyanate groups in the polyisocyanate (A) is 100 mol%, the polyisocyanate (A) include 20 mol% or more of a secondary isocyanate group. The polyisocyanate (A) may be configured of one kind of polyisocyanate, or may be configured of two or more kinds thereof.

Examples of the polyisocyanate (A) include an aliphatic polyisocyanate, an alicyclic polyisocyanate, an aromatic polyisocyanate, and a heterocyclic polyisocyanate, and these polyisocyanates are used alone or in combination of two or more kinds thereof so as to satisfy the above conditions. These polyisocyanates may include a dimer, a trimer, or a prepolymer.

Examples of the aliphatic polyisocyanate include hexamethylene diisocyanate, 2,2,4-trimethyl hexamethylene diisocyanate, 2,4,4-trimethyl hexamethylene diisocyanate, pentamethylene diisocyanate, lysine diisocyanato methyl ester, lysine triisocyanate, m-xylylene diisocyanate, α,α,α',α'-tetramethylxylylene diisocyanate, bis(isocyanatomethyl) naphthalene, mesitylene triisocyanate, bis(isocyanatomethyl) sulfide, bis(isocyanatoethyl) sulfide, bis(isocyanatomethyl) disulfide, bis(isocyanatoethyl) disulfide, bis(isocyanatomethylthio) methane, bis(isocyanatoethylthio) methane, bis(isocyanatoethylthio) ethane, and bis(isocyanatomethylthio) ethane, and at least one kind thereof can be used.

Examples of the alicyclic isocyanate include isophorone diisocyanate, bis(isocyanatomethyl) cyclohexane, dicyclohexylmethane diisocyanate, bis(4-isocyanatocyclohexyl) methane, cyclohexane diisocyanate, methylcyclohexane diisocyanate, dicyclohexyl dimethyl methane isocyanate,
2,5-bis(isocyanatomethyl) bicyclo-[2.2.1]-heptane,
2,6-bis(isocyanatomethyl) bicyclo-[2.2.1]-heptane,
3,8-bis(isocyanatomethyl) tricyclodecane,
3,9-bis(isocyanatomethyl) tricyclodecane,
4,8-bis(isocyanatomethyl) tricyclodecane, and
4,9-bis(isocyanatomethyl) tricyclodecane, and at least one kind thereof can be used.

Examples of the aromatic polyisocyanate include tolylene diisocyanate, 4,4'-diphenylmethane diisocyanate, and phenylene diisocyanate, and tolylene isocyanate is one or more kinds of isocyanates selected from 2, 4-tolylene diisocyanate and 2, 6-tolylene diisocyanate. Examples of the tolylene diisocyanate include 2,4-diisocyanate, 2,6-tolylene diisocyanate, and a mixture of 2,4-tolylene diisocyanate and 2,6-tolylene diisocyanate, and at least one kind thereof can be used.

Examples of the heterocyclic polyisocyanate include 2,5-diisocyanatothiophene, 2,5-bis(isocyanatomethyl) thiophene, 2,5-diisocyanatotetrahydrothiophene, 2,5-bis(isocyanatomethyl) tetrahydrothiophene, 3,4-bis(isocyanatomethyl)
tetrahydrothiophene, 2,5-diisocyanato-1,4-dithiane, 2,5-bis(isocyanatomethyl)-1,4-dithiane,
4,5-diisocyanato-1,3-dithiolane, and
4,5-bis(isocyanatomethyl)-1,3-dithiolane, and at least one kind thereof can be used.

The polyisocyanate (A), as one kind or in combination of two or more kinds selected from these polyisocyanates, can be used such that a secondary isocyanate group is included in 20 mol% or more in a case where the total molar number of entire isocyanate groups is 100 mol%.

The polyisocyanate (A) preferably includes at least one kind selected from hexamethylene diisocyanate,
bis(4-isocyanatocyclohexyl) methane, and isophorone diisocyanate.

In the present embodiment, the secondary isocyanate group can be included in 20 mol% or more, preferably 20 mol% to 100 mol%, more preferably 30 mol% to 100 mol%, and still more preferably 40 mol% to 100 mol%, in a case where the total molar number of entire isocyanate groups is 100 mol%.

Thus, it is possible to reduce the amount of acidic phosphoric ester (C), and thus, it is possible to obtain a molded product having excellent transparency, and in addition to excellent releasability, it is possible to suppress damage of the glass mold and the molded product itself. That is, it is possible to achieve both improvement of the productivity by improving the releasability of the molded product and improvement of the yield of the molded product.

### [Polythiol (B)]

The polythiol (B) used in the present embodiment is a compound having two or more mercapto groups. The polythiol (B) can be used as one kind or in a combination of two or more kinds of compounds having two or more mercapto groups.

Examples of the polythiol (B) include aliphatic polythiol compounds such as methanedithiol, 1,2-ethanedithiol, 1,2,3-propanetrithiol, 1,2-cyclohexanedithiol,
bis(2-mercaptoethyl) ether, tetrakis(mercaptomethyl) methane, diethylene glycol bis(2-mercaptoacetate), diethylene glycol bis(3-mercaptopropionate), ethylene glycol bis(2-mercaptoacetate), ethylene glycol bis(3-mercaptopropionate), trimethylolpropane tris(2-mercaptoacetate), trimethylolpropane
tris(3-mercaptopropionate), trimethylolethane
tris(2-mercaptoacetate), trimethylolethane
tris(3-mercaptopropionate), pentaerythritol
tetrakis(2-mercaptoacetate), pentaerythritol
tetrakis(3-mercaptopropionate), bis(mercaptomethyl) sulfide, bis(mercaptomethyl) disulfide, bis(mercaptoethyl) sulfide, bis(mercaptoethyl) disulfide, bis(mercaptopropyl) sulfide, bis(mercaptomethylthio) methane, bis(2-mercaptoethylthio) methane, bis(3-mercaptopropylthio) methane, 1,2-bis(mercaptomethylthio) ethane, 1,2-bis(2-mercaptoethylthio) ethane,
1,2-bis(3-mercaptopropylthio) ethane,
1,2,3-tris(mercaptomethylthio) propane,
1,2,3-tris(2-mercaptoethylthio) propane,
1,2,3-tris(3-mercaptopropylthio) propane,
4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethylthiomethyl) methane,
tetrakis(2-mercaptoethylthiomethyl) methane,
tetrakis(3-mercaptopropylthiomethyl) methane,
bis(2,3-mercaptopropyl) sulfide,
2,5-dimercaptomethyl-1,4-dithiane, 2,5-dimercapto-1,4-dithiane, 2,5-dimercaptomethyl-2,5-dimethyl-1,4-dithiane, and esters of these thioglycolic acid and mercaptopropionic acid, hydroxymethyl sulfide bis(2-mercaptoacetate), hydroxymethyl sulfide bis(3-mercaptopropionate), hydroxyethyl sulfide
bis(2-mercaptoacetate), hydroxyethyl sulfide
bis(3-mercaptopropionate), hydroxymethyl disulfide bis(2-mercaptoacetate), hydroxymethyl disulfide
bis(3-mercaptopropionate), hydroxyethyl disulfide bis(2-mercaptoacetate), hydroxyethyl disulfide
bis(3-mercaptopropionate), 2-mercaptoethyl ether bis(2-mercaptoacetate), 2-mercaptoethyl ether
bis(3-mercaptopropionate), thiodiglycolic acid
bis(2-mercaptoethylester), thiodipropionic acid
bis(2-mercaptoethylester), dithiodiglycolic acid bis(2-mercaptoethyl ester), dithiodipropionic acid bis(2-mercaptoethylester), 1,1,3,3-tetrakis(mercaptomethylthio) propane, 1,1,2,2-tetrakis(mercaptomethylthio) ethane, 4,6-bis(mercaptomethylthio)-1,3-dithiane,
tris(mercaptomethylthio) methane, and tris(mercaptoethylthio) methane;
aromatic polythiol compounds such as 1,2-dimercaptobenzene, 1,3-dimercaptobenzene, 1,4-dimercaptobenzene,
1,2-bis(mercaptomethyl) benzene, 1,3-bis(mercaptomethyl) benzene, 1,4-bis(mercaptomethyl) benzene, 1,2-bis(mercaptoethyl) benzene, 1,3-bis(mercaptoethyl) benzene, 1,4-bis(mercaptoethyl) benzene, 1,3,5-trimercaptobenzene, 1,3,5-tris(mercaptomethyl) benzene, 1,3,5-tris(mercaptomethyleneoxy) benzene,
1,3,5-tris(mercaptoethyleneoxy) benzene, 2,5-toluenedithiol, 3,4-toluenedithiol, 1,5-naphthalenedithiol, and
2,6-naphthalenedithiol; and
heterocyclic polythiol compounds such as
2-methylamino-4,6-dithiol-sym-triazine, 3,4-thiophene dithiol, bismuthiol, 4,6-bis(mercaptomethylthio)-1,3-dithiane, and 2-(2,2-bis(mercaptomethylthio)ethyl)-1,3-dithietane, and at least one kind thereof can be used. Moreover, the present invention is not limited to these exemplary compounds.

Furthermore, oligomers of these polythiols or halogen substitutes such as a chlorine substitute and a bromine substitute may be used. These active hydrogen compounds can be used alone or in combination of two or more kinds thereof.

As the polythiol (B), at least one kind selected from pentaerythritol tetrakis(2-mercaptoacetate), pentaerythritol tetrakis(3-mercaptopropionate), bis(mercaptoethyl) sulfide, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 2,5-mercaptomethyl-1,4-dithiane,
1,1,3,3-tetrakis(mercaptomethylthio) propane,
4,6-bis(mercaptomethylthio)-1,3-dithiane,
2-(2,2-bis(mercaptomethylthio)ethyl)-1,3-dithietane, and ethylene glycol bis(3-mercaptopropionate) is preferably used, and
at least one kind selected from pentaerythritol tetrakis(3-mercaptopropionate),
4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane is more preferably used.

### [Acidic Phosphoric Ester (C)]

The acidic phosphoric ester (C) can be represented by General Formula (1).

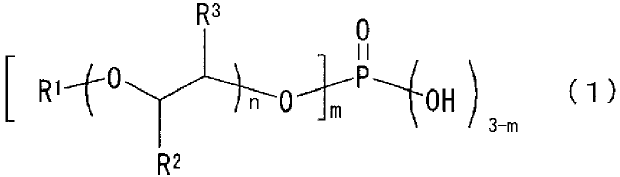

In General Formula (1), m represents an integer of 1 or 2, n represents an integer of 0 to 18, R¹ represents an alkyl group having 1 to 20 carbon atoms, and each of R² and R³ independently represents a hydrogen atom, a methyl group, or an ethyl group. The number of carbon atoms in [ ]ₘ is preferably 4 to 20.

As R¹ in General Formula (1), an organic residue derived from a linear aliphatic compound such as methane, ethane, propane, butane, pentane, hexane, heptane, octane, nonane, decane, undecane, dodecane, tetradecane, or hexadecane, an organic residue derived from a branched aliphatic compound such as 2-methylpropane, 2-methylbutane, 2-methylpentane, 3-methylpentane, 3-ethylpentane, 2-methylhexane, 3-methylhexane, 3-ethylhexane, 2-methylheptane, 3-methylheptane, 4-methylheptane, 3-ethylheptane, 4-ethylheptane, 4-propylheptane, 2-methyloctane, 3-methyloctane, 4-methyloctane, 3-ethyloctane, 4-ethyloctane, or 4-propyloctane, and an organic residue derived from an alicyclic compound such as cyclopentane, cyclohexane, 1,2-dimethyl cyclohexane, 1,3-dimethyl cyclohexane, and
1,4-dimethyl cyclohexane can be exemplified, and at least one kind selected from these can be used. Moreover, the present invention is not limited to these exemplary compounds. As the acidic phosphoric ester (C), at least one kind or a mixture of two or more kinds thereof can be used.

In General Formula (1), n is preferably 0 or 1.

In a case where n is 0, R¹ is preferably a linear or branched alkyl group having 4 to 12 carbon atoms, and more preferably a linear alkyl group having 8 to 12 carbon atoms.

In a case where n is 1, R¹ is preferably a linear or branched alkyl group having 1 to 20 carbon atoms, and preferably a linear or branched alkyl group having 3 to 12 carbon atoms.

The acidic phosphoric ester (C) can be used as one kind or a mixture of two or more kinds selected from these.

As the acidic phosphoric ester (C), ZelecUN (manufactured by Stepan Company), an internal mold release agent for MR (manufactured by Mitsui Chemicals, Inc.), JP series manufactured by JOHOKU CHEMICAL CO., LTD., Phosphanol series manufactured by TOHO Chemical Industry Co., Ltd., or AP and DP Series manufactured by DAIHACHI CHEMICAL INDUSTRY CO., LTD. can be used, and ZelecUN (manufactured by Stepan Company) or an internal mold release agent for MR (manufactured by Mitsui Chemicals, Inc.) is more preferable.

The amount of the acidic phosphoric ester (C) can be 100 ppm to 700 ppm, preferably 100 ppm to 600 ppm, and more preferably 100 ppm to 500 ppm, with respect to the total weight of the polyisocyanate (A) and the polythiol (B).

In the present embodiment, by using the polyisocyanate (A) including a predetermined amount of secondary isocyanate group, even in the case of reducing the amount of acidic phosphoric ester (C) in the above manner, it is possible to obtain a molded product having excellent transparency, and the releasability is also excellent, and thus, it is possible to suppress damage of the glass mold and the molded product itself. That is, it is possible to achieve both improvement of the productivity by improving the releasability of the molded product and improvement of the yield of the molded product by improving the transparency. Thus, if the amount of acidic phosphoric ester (C) is the amount described above, it is possible to improve releasability and transparency in industrial production, and economic efficiency or the like is also excellent.

### [Ultraviolet Absorber (D)]

The ultraviolet absorber (D) is not particularly limited as long as the maximum absorption wavelength thereof when dissolved in a chloroform solution is in a range of 350 nm to 370 nm.

By using the ultraviolet absorber (D), it is possible to obtain an optical material which selectively absorbs light in a low wavelength region of 400 nm to 420 nm, has a very high shielding effect against blue light, and has an excellent colorless and transparent appearance.

Examples of the ultraviolet absorber (D) include benzophenone-based compounds, triazine compounds, and benzotriazole-based compounds.

Specifically, benzophenone-based compounds such as 2,2'-dihydroxy-4-methoxybenzophenone,
2-hydroxy-4-acryloyloxybenzophenone,
2-hydroxy-4-acryloyloxy-5-tert-butyl benzophenone, and 2-hydroxy-4-acryloyloxy-2',4'-dichlorobenzophenone;
triazine compounds such as
2-[4-[(2-hydroxy-3-dodecyloxypropyl)oxy]-2-hydroxyphenyl]-4,6-bi s(2,4-dimethylphenyl)-1,3,5-triazine,
2-[4-(2-hydroxy-3-tridecyloxypropyl)oxy]-2-hydroxyphenyl]-4,6-bi s(2,4-dimethylphenyl)-1,3,5-triazine,
2-[4-[(2-hydroxy-3-(2'-ethyl)hexyl)oxy]-2-hydroxyphenyl]-4,6-bis (2,4-dimethylphenyl)-1,3,5-triazine,
2,4-bis(2-hydroxy-4-butyloxyphenyl)-6-(2,4-bis-butyloxyphenyl)-1 ,3,5-triazine, and
2-(2-hydroxy-4-[1-octyloxycarbonylethoxy]phenyl)-4,6-bis(4-pheny lphenyl)-1,3,5-triazine; and
benzotriazole-based compounds such as
2-(2H-benzotriazol-2-yl)-4-methylphenol, 2-(2H-benzotriazol-2-yl)-4-tert-octylphenol,
2-(2H-benzotriazol-2-yl)-4,6-bis(1-methyl-1-phenylethyl) phenol, 2-(2H-benzotriazol-2-yl)-4,6-di-tert-pentylphenol, 2-(5-chloro-2H-benzotriazol-2-yl)-4-methyl-6-tert-butylphenol, 2-(5-chloro-2H-benzotriazol-2-yl)-2,4-tert-butylphenol, 2,2'-methylenebis[6-(2H-benzotriazol-2-yl)-4-(1,1,3,3-tetramethy lbutyl)phenol], and
2-(2-hydroxy-3-t-butyl-5-methylphenyl)-chlorobenzotriazole are exemplified. These ultraviolet absorbers may be used alone or in combination of two or more kinds thereof.

As the ultraviolet absorber (D), a benzotriazole-based compound is preferable, and examples thereof include 2-(2H-benzotriazol-2-yl)-4-tert-octylphenol, 2-(5-chloro-2H-benzotriazol-2-yl)-4-methyl-6-tert-butylphenol, and 2-(2-hydroxy-3-t-butyl-5-methyl-phenyl)-chlorobenzotriazole. Among these, a chloro-substituted benzotriazole-based compound is more preferable, and examples thereof include 2-(2-hydroxy-3-t-butyl-5-methylphenyl)-chlorobenzotriazole.

Examples of the commercially available products of 2-(2-hydroxy-3-t-butyl-5-methylphenyl)-chlorobenzotriazole include TINUVIN326 manufactured by BASF Corp., SEESEORB703 manufactured by SHIPRO KASE KAISHA LTD., Viosorb550 manufactured by KYODO CHEMICAL CO., LTD., and KEMISORB73 manufactured by CHEMIPRO KASEI KAISHA LTD. By the ultraviolet absorber (D) being one kind selected from chloro-substituted benzotriazole-based compounds, it is possible to more effectively obtain an optical material which has a very high shielding effect against harmful light from ultraviolet rays to blue light having a wavelength of about 420 nm, and has an excellent colorless and transparent appearance.

In the present embodiment, as the ultraviolet absorber (D), one or more kinds of these ultraviolet absorbers are preferably used, and the ultraviolet absorber (D) may contain two or more different ultraviolet absorbers. Moreover, the ultraviolet absorbers configuring the ultraviolet absorber (D) have the maximum absorption peak in a range of 350 nm to 370 nm.

### [Components Other Than Components (A) to (D)]

The polymerizable composition for optical materials of the present embodiment can include a catalyst, an active hydrogen compound such as an alcohol, a hydroxy thiol, or an amine, an epoxy compound, a thioepoxy compound, an olefin compound, a carbonate compound, an ester compound, metal, a metal oxide, or fine particles thereof, for example, organic modified metal (oxide) fine particles, and a resin modifier other than urethane forming raw materials, such as an organometallic compound or an inorganic material, in addition to (A), (B), (C), and (D), for the purpose of improving various physical properties of a polythiourethane molded product to be obtained, operability, and polymerization reactivity of the polymerizable composition.

Examples of the catalyst include a Lewis acid, an amine, an organic acid, and an amine organic acid salt, and a Lewis acid, an amine, or an amine organic acid salt is preferable, and dimethyl tin chloride, dibutyl tin chloride, or dibutyl tin laurate is more preferable.

In addition, various additives such as a chain extending agent, a crosslinking agent, a photostabilizer, an antioxidant, an oil-soluble dye, a filler, and bluing agent can be included according to the purpose, similarly to known molding methods.

The amount of these additives added is preferably 0.05 parts by weight to 2.0 parts by weight and more preferably 0.05 parts by weight to 1.5 parts by weight, with respect to a total of 100 parts by weight of the polyisocyanate (A), the polythiol (B), and a polymerizable compound which can be added as necessary.

The polymerizable composition for optical materials of the present embodiment can be obtained by mixing the above-described components. Mixing can be performed by a method known in the related art.

In the polymerizable composition for optical materials of the present embodiment, the molar ratio of the total mercapto groups of the polythiol (B) included in the polymerizable composition with respect to the total isocyanate groups of the polyisocyanate (A) included in the polymerizable composition is in a range of 0.8 to 1.2, preferably in a range of 0.85 to 1.15, and more preferably in a range of 0.9 to 1.1. In the above range, a polymerizable composition for optical materials suitably used as optical materials, in particular, a plastic eyeglass lens can be obtained.

In the polymerizable composition for optical materials of the present embodiment, 0.1% by weight to 1.5% by weight of the ultraviolet absorber (D) can be included, preferably 0.1% by weight to 0.8% by weight thereof can be included, more preferably 0.2% by weight to 0.6% by weight thereof can be included, and particularly preferably 0.3% by weight to 0.5% by weight thereof can be included, in 100% by weight of the polymerizable composition for optical materials, from the viewpoint of the shielding effect against harmful light from ultraviolet rays to blue light having a wavelength of about 420 nm.

In the present embodiment, a process for producing optical materials is not particularly limited, but preferable examples of the manufacturing method include cast polymerization.

### <Uses>

Next, the uses of the optical material of the present embodiment will be described.

Since, by using the optical material of the present embodiment, even when the acidic phosphoric ester (C) is used as a release agent, the transparency of a molded product is improved, the releasability becomes also excellent, and light in a low wavelength region of 400 nm to 420 nm is selectively absorbed, the shielding effect against blue light is excellent and the balance of these properties is excellent.

Furthermore, since the optical material of the present embodiment can cut light having a wavelength of 400 nm to 420 nm, it is possible to improve disorders such as eye strain or stress.

The optical material can be used as various plastic lenses such as plastic eyeglass lenses, goggles, the eyeglass lenses for vision correction, lenses for imaging devices, Fresnel lenses for a liquid crystal projector, lenticular lenses, and contact lenses, a sealing material for light-emitting diode (LED), an optical waveguide, an optical adhesive used for bonding an optical lens or an optical waveguide, an antireflection film used in an optical lens, a transparent coating used in liquid crystal display device members (a substrate, a light guiding plate, a film, a sheet, and the like), a sheet or film to be attached on the front glass of an automobile or a motorcycle helmet, or a transparent substrate.

(1) The light transmittance of the optical material of the present embodiment measured at a thickness of 2 mm at a wavelength of 410 nm is 10% or less, and preferably 5% or less,
(2) the light transmittance of the optical material of the present embodiment measured at a thickness of 2 mm at a wavelength of 420 nm is 70% or less, and preferably 50% or less, and
(3) the light transmittance of the optical material of the present embodiment measured at a thickness of 2 mm at a wavelength of 440 nm is 80% or more, and preferably 85% or more.

In a case where the light transmittance is in the above range, the shielding effect against harmful light from ultraviolet rays to blue light having a wavelength of about 420 nm is improved, and the optical material has an excellent colorless and transparent appearance. In addition, in a case where the light transmittance at 440 nm is 80% or more, it is possible to obtain a molded product (optical material) having excellent colorless and transparent appearance. Moreover, these numerical ranges can be combined arbitrarily.

As the configuration of the optical material of the present embodiment, typically, an optical material comprised of a lens substrate, an optical material comprised of a lens substrate and a film layer, an optical material comprised of a lens substrate and a coating layer, and an optical material comprised of a lens substrate, a film layer, and a coating layer are exemplified. The lens substrate is obtained from the polymerizable composition for optical materials of the present embodiment, and the ultraviolet absorber (D) is included in the lens substrate. Moreover, the ultraviolet absorber (D) may also be included in the film layer and/or the coating layer.

Specific examples of the optical material of the present embodiment include an optical material comprised of only a lens substrate, an optical material obtained by stacking a film layer over at least one surface of the lens substrate, an optical material obtained by stacking a coating layer over at least one surface of the lens substrate, an optical material obtained by stacking a film layer and a coating layer over at least one surface of the lens substrate, and an optical material obtained by sandwiching a film layer with two lens substrates.

The optical material of the present embodiment has the characteristics (1) to (3) described above as the entire optical material, and can be manufactured as follows. The ultraviolet absorber (D) included in the optical material may include one or more kinds of compounds satisfying the above-described conditions. Moreover, a known ultraviolet absorber other than the ultraviolet absorber (D) can also be further included in the lens substrate, the film layer, or the coating layer.

For example, after producing a molded product (lens substrate) using the polymerizable composition for optical materials of the present embodiment, by using the molded product, an optical material can be prepared.

Moreover, the optical material of the present embodiment can be suitably used as the plastic lens of a plastic eyeglass lens. The optical material of the present embodiment will be described by a plastic lens below.

As the plastic lens of the present embodiment, the following configurations can be exemplified.

Plastic lens A is comprised of a lens substrate comprised of the polymerizable composition for optical materials of the present embodiment.

Plastic lens B is comprised of a lens substrate and a film or layer stacked over at least one surface of lens substrate (a lens substrate obtained from the composition for optical materials of the present embodiment).

Plastic lens C is comprised of a film and a lens substrate (a lens substrate obtained from the composition for optical materials of the present embodiment) stacked over both surfaces of the film.

The plastic lenses A to C obtained in the above configurations are designed to satisfy the characteristics (1) to (3) of the present invention. The optical material can be suitably used in a plastic eyeglass lens.

### (Plastic Lens A)

The plastic lens A in the present embodiment has a lens substrate comprised of the polymerizable composition for optical materials. The obtained plastic lens is designed to satisfy the characteristics (1) to (3) of the present invention.

Although the process for producing the plastic lens A having a lens substrate comprised of the polymerizable composition for optical materials is not particularly limited, as a preferable manufacturing method, cast polymerization using a lens casting mold is exemplified.

In the present embodiment, when a resin is formed, in addition to the "other components", various additives such as a chain extending agent, a crosslinking agent, an antioxidant, an oil-soluble dye, a filler, and an adhesion improver may be added according to the purpose, similarly to known molding methods.

A process for producing the plastic lens A of the present embodiment will be described in detail below.

The plastic lens A of the present embodiment can be manufactured using a lens casting mold provided with a first mold having a first surface for forming one surface of the plastic lens A, a second mold having a second surface for forming the other surface of the plastic lens A, and a material for forming cavity for fixing the first mold and the second mold so as to face these surfaces each other. The curvature radius R of at least one surface of the first surface and the second surface satisfies the range of 30 mm ≤ R ≤ 100 mm.

According to the polymerizable composition for optical materials of the present embodiment, even in the case of a lens casting mold provided with a lens forming surface having such a curvature radius, the releasability is excellent.

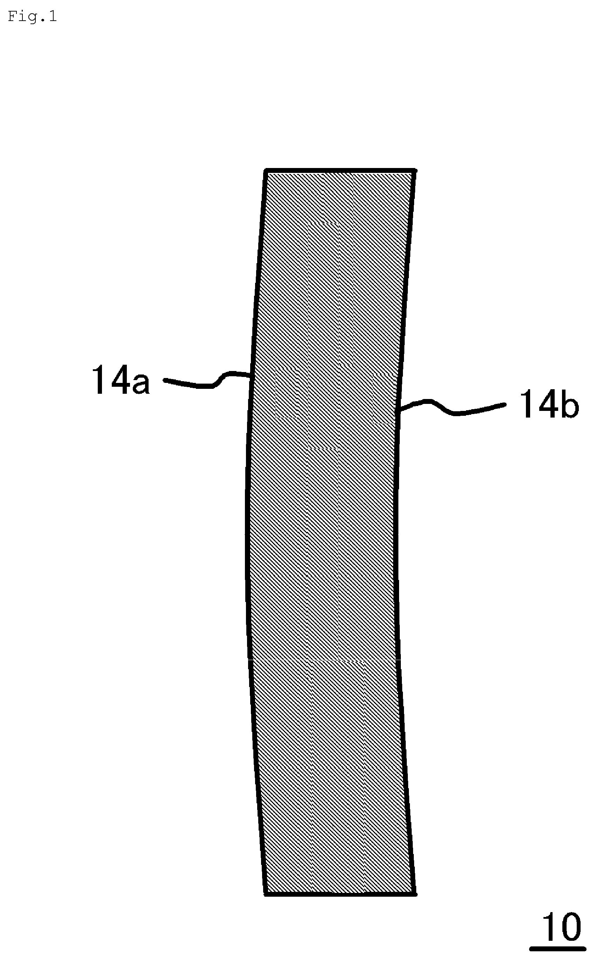

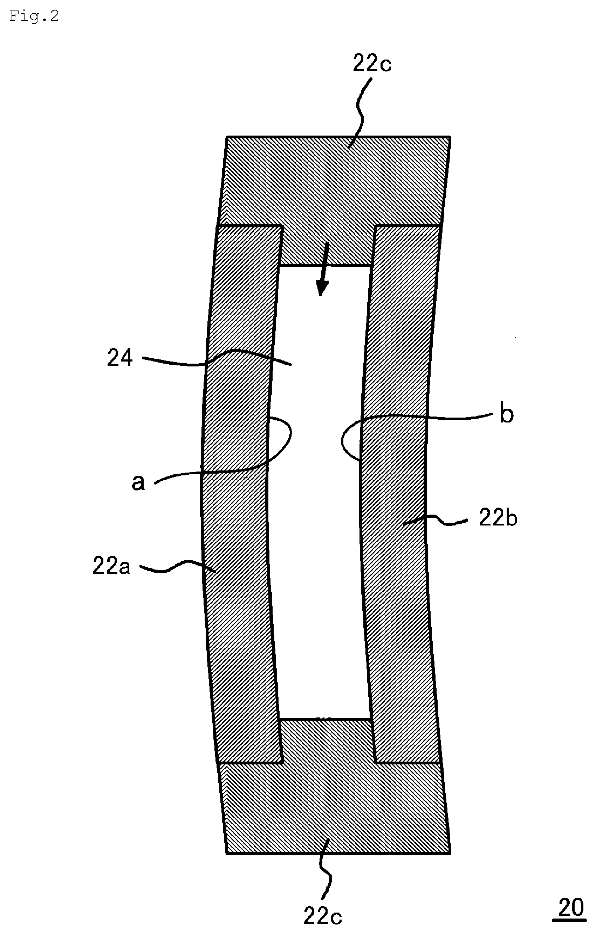

In the present embodiment, a plastic lens A 10 having a convex surface 14a and a concave surface 14b, each of which has a curvature radius R of 30 mm ≤ R ≤ 100 mm, as shown in FIG. 1, can be obtained using a lens casting mold 20 as shown in FIG. 2.

The lens casting mold 20 is provided with a first mold 22a having a first surface (concave surface a) for forming one surface of a plastic eyeglass lens, a second mold 22b having a second surface (convex surface b) for forming the other surface, and a material 22c for forming cavity for fixing the first mold and the second mold so as to face these surfaces each other. In the lens casting mold 20, a cavity 24 surrounded by the concave surface a, the convex surface b, and the material 22c for forming cavity is formed.

The present embodiment will be described using the lens casting mold 20 in which the curvature radius R of the concave surface a and the convex surface b satisfies the range of 30 mm ≤ R ≤ 100 mm.

As the material of the gasket 22c, polyvinyl chloride, an ethylene-vinyl acetate copolymer, an ethylene-ethyl acrylate copolymer, an ethylene-propylene copolymer, an ethylene-propylene-diene copolymer, a polyurethane elastomer, fluorine rubber, or soft elastic resins formed by blending polypropylene with these is used. Materials which are not swelled and eluted with respect to the polymerizable composition for optical materials used in the present embodiment are preferable.

As the materials of the first mold 22a and the second mold 22b, glass, a metal, or the like is exemplified, and glass is typically used. In addition, the mold may be previously coated with a coating liquid for imparting hard coat performance to the lens material.

The polymerizable composition for optical materials is injected into the cavity 24 of the lens casting mold 20 by predetermined injection means. At this time, a degassing treatment under reduced pressure, a filtration treatment such as pressurization or depressurization, or the like is preferably performed, as necessary, depending on properties that obtained plastic eyeglass lenses require.

Next, the polymerizable composition for optical materials in the cavity 24 is polymerized and cured.

Since polymerization conditions significantly vary depending on the kinds and amounts of polymerizable composition for optical materials and the catalyst used, the shape of the mold, and the like, the polymerization conditions are not limited, but, approximately, polymerization is performed at a temperature of -50°C to 150°C for 1 hour to 50 hours. Depending on cases, the polymerizable composition is preferably held in a temperature range of 10°C to 150°C or slowly heated, and cured for 1 hour to 25 hours.

After polymerization and curing, the obtained molded product is released from the lens casting mold 20. The molded product may be subjected to a treatment such as annealing, as necessary. The treatment is performed typically at a temperature within a range of 50°C to 150°C, and preferably performed at a temperature within a range of 90°C to 140°C, and more preferably performed at a temperature within a range of 100°C to 130°C.

The obtained molded product in this manner can be used as a plastic eyeglass lens. As shown in FIG. 1, the plastic lens A 10 has the convex surface 14a and the concave surface 14b, each of which has a curvature radius R of 30 mm ≤ R ≤ 100 mm.

In addition, the plastic lens A in the present embodiment may have various coating layers over the lens substrate comprised of the polymerizable composition for optical materials in accordance with the purpose or use.

The coating layer can be manufactured using a coating material (composition), and the coating material may include the ultraviolet absorber (D). In addition, after the coating layer is formed, by immersing the coating layer-attached plastic lens in a dispersion obtained by dispersing the ultraviolet absorber (D) in water or a solvent and by impregnating the coating layer with the ultraviolet absorber (D), the plastic lens A can be prepared.

### (Plastic Lens B)

The plastic lens B in the present embodiment has a film or layer over at least one surface of lens substrate surfaces comprised of the polymerizable composition for optical materials. The obtained plastic lens is designed to satisfy the characteristics (1) to (3) of the present invention.

As the process for producing the plastic lens B, (1) a method in which a lens substrate is manufactured with the polymerizable composition for optical materials, and a film or sheet is attached onto at least one surface of the lens substrate and (2) a method in which in the cavity of a mold held by a gasket or a tape as described below, a film or sheet is arranged along one inner wall of the mold, and the polymerizable composition for optical materials is injected into the cavity and cured can be exemplified.

The film or sheet used in the method of (1) is not particularly limited, and the film or sheet can be obtained from pellets of the composition obtained by melting and kneading or impregnation, by various known methods in the related art, specifically, for example, molding methods such as an injection molding method, a profile extrusion molding method, a pipe molding method, a tube molding method, a coating molding method of heterogeneous molded product, an injection blow molding method, a direct blow molding method, a T-die sheet or film molding method, an inflation film molding method, and a press molding method. The obtained film or sheet includes polycarbonate or polyolefin. The film or sheet may include the ultraviolet absorber (D).

As the method for attaching the film or sheet over the surface of the lens substrate, known methods can be used.

The cast polymerization in the method of (2) can be performed in the same manner as in the plastic lens A.

In addition, the plastic lens B in the present embodiment may have various coating layers over a lens substrate comprised of the polymerizable composition for optical materials or a "film or layer" in accordance with the purpose or use. In the same manner as in the plastic lens A, the ultraviolet absorber (D) can be included in the coating layer.

### (Plastic Lens C)

The plastic lens C in the present embodiment is manufactured by stacking a lens substrate obtained from the polymerizable composition for optical materials of the present embodiment over both surfaces of a film. The obtained plastic lens is designed to satisfy the characteristics (1) to (3) of the present invention.

As the process for producing the plastic lens C, (1) a method in which a lens substrate comprised of the polymerizable composition for optical materials of the present embodiment is manufactured, and the lens substrate is attached over both surfaces of a film or sheet and (2) a method in which in the cavity of a mold held by a gasket or a tape, a film or sheet is arranged in a state of being separated from the inner wall of the mold, and the polymerizable composition for optical materials of the present embodiment is injected into the cavity and cured can be exemplified.

As the film or sheet and the lens substrate used in the method of (1), the same as those in the method of (1) of the plastic lens B can be used. As the method for attaching the film or sheet over the surface of the lens substrate, known methods can be used.

The method of (2) can be performed specifically in the following manner.

In the cavity of the lens casting mold used in the process for producing the plastic lens A, the film or sheet is provided such that both surfaces of the film or sheet becomes parallel to the mold inner surface on the front side facing both surfaces of the film or sheet.

Next, the polymerizable composition for optical materials of the present embodiment is injected into two spaces between the mold and a polarizing film in the cavity of the lens casting mold by predetermined injection means.

Furthermore, after the composition is injected, the lens casting mold is heated to cure and mold the composition in a heatable device such as an oven or in water by predetermined temperature program. The resin molded product may be subjected to a treatment such as annealing as necessary.

In addition, the plastic lens C in the present embodiment may have various coating layers over the lens substrate in accordance with the purpose or use. In the same manner as in the plastic lens A, the ultraviolet absorber (D) can be included in the coating layer.

### [Plastic Eyeglass Lens]

Using the plastic lens of the present embodiment, it is possible to obtain a plastic eyeglass lens. Moreover, a coating layer may be provided over one surface or both surfaces thereof as necessary.

Examples of the coating layer include a primer layer, a hard coating layer, an antireflection film layer, an antifog coated film layer, an antifouling layer, a water-repellent layer, and the like. It is possible to solely use each of the above coating layers, or it is possible to use the coating layer after multilayering a plurality of coating layers. In a case where the coating layers are provided over both surfaces, similar coating layers may be provided on the respective surfaces, or different coating layers may be provided thereon.

In the coating layers, an ultraviolet absorber for the purpose of protecting lenses or eyes from ultraviolet rays, infrared absorber for the purpose of protecting eyes from infrared rays, a light stabilizer or an antioxidant for the purpose of improving weather resistance of lenses, a dye or pigment, furthermore, a photochromic dye or photochromic pigment for the purpose of improving fashionability of lenses, an antistatic agent, and other well-known additives for enhancing performances of lenses may be jointly used respectively. For layers coated by coating, various leveling agents may be used for the purpose of improving coatability.

The primer layer is typically formed between the hard coating layer described below and an optical lens. The primer layer is a coating layer having an object of improving adhesion between the hard coating layer formed on the primer layer and the lens, and, depending on cases, it is also possible to improve impact resistance. Although any material can be used for the primer layer as long as it has high adhesion to an obtained optical lens, in general, a primer composition mainly including a urethane-based resin, an epoxy-based resin, a polyester-based resin, a melanin-based resin, polyvinyl acetal, or the like is used. For the primer composition, a suitable solvent having no influence on lenses may be used for the purpose of adjusting a viscosity of the composition. It is needless to say that the primer composition may be used without a solvent.

The plastic eyeglass lenses obtained by using the thiourethane resin of the present embodiment may be stained using a purpose-oriented pigment for the purpose of imparting fashionability, photochromic properties, or the like, and then used. Lenses can be stained by a known staining method.

The present embodiment of the present invention has been described with reference to drawings, but various aspects can also be employed within a range not impairing the effects of the present invention. For example, the embodiments as described below can also be employed.

In the lens casting mold, the curvature radius R of at least one surface of the first surface and the second surface may satisfy the range of 30 mm ≤ R ≤ 100 mm.
(1) A case where the first surface is a concave surface, the curvature radius R thereof satisfies the range of 30 mm ≤ R ≤ 100 mm, and the second surface is substantially planar, (2) a case where the first surface is a convex surface, the curvature radius R thereof satisfies the range of 30 mm ≤ R ≤ 100 mm, and the second surface is substantially planar, (3) a case where both the first surface and the second surface are concave surfaces and the curvature radiuses R of both surfaces satisfies the range of 30 mm ≤ R ≤ 100 mm, and (4) a case where both the first surface and the second surface are convex surfaces and the curvature radiuses R of both surfaces satisfies the range of 30 mm ≤ R ≤ 100 mm can be exemplified.

Similarly, the curvature radius R of at least one surface of the obtained plastic eyeglass lens may satisfy the range of 30 mm ≤ R ≤ 100 mm.
(1) A case where one surface is a convex surface, the curvature radius R thereof satisfies the range of 30 mm ≤ R ≤ 100 mm, and the other surface is substantially planar, (2) a case where one surface is a concave surface, the curvature radius R thereof satisfies the range of 30 mm ≤ R ≤ 100 mm, and the other surface is substantially planar, (3) a case where both one surface and other surface are concave surfaces and the curvature radiuses R of both surfaces is 30 mm ≤ R ≤ 100 mm, and (4) a case where both one surface and the other surface are convex surfaces and the curvature radiuses R of both surfaces is 30 mm ≤ R ≤ 100 mm can be exemplified.

### EXAMPLES

Hereinafter, the present invention will be specifically described based on Examples, but the present invention is not limited thereto.

### [Evaluation Method of Releasability]

As shown in FIG. 2, a polymerizable composition was injected into a mold obtained by combining glass substrates having a curvature radius R of a concave surface a and a convex surface b of 30 mm ≤ R ≤ 100 mm, and the composition was polymerized. By inserting a wedge kind release jig into the contact surface between the obtained molded product and the mold, the molded product was detached from the mold. A case of being released without a defect such as breakage or damage in the molded product and the mold was evaluated as ○. A case where a defect in which of the molded product was broken at the time of the work, a part of the broken mold was joined to the molded product, or the mold was damaged was observed was evaluated as ×.

### [Example 1]

0.05 parts by weight of ZelecUN (manufactured by Stepan Company, an acidic phosphoric ester represented by General Formula (1)), 1.1 parts by weight of
2-(2-hydroxy-3-t-butyl-5-methylphenyl)-chlorobenzotriazole (manufactured by BASF Corp., TINUVIN326: maximum absorption wavelength of 352 nm), and 60.2 parts by weight of bis(4-isocyanatocyclohexyl) methane were mixed by stirring at 20°C, whereby a homogeneous solution was obtained. 39.8 parts by weight of 4-mercaptomethyl-1,8-dimercapto-3,6-dithiaoctane and 0.15 parts by weight of dibutyl tin (II) dichloride were added to the homogeneous solution, and the resultant product was mixed by stirring at 20°C, whereby a mixed solution was obtained. The mixed solution was defoamed at 600 Pa for 1 hour, then, filtered using a PTFE filter having a pore size of 1 µm, and injected into a mold. This mold was put into a polymerization oven, and heated from 25°C to 130°C for 16 hours to polymerize the solution. After polymerization, the mold was taken out from the oven and cooled, and the resultant product was released from the mold, whereby a molded product was obtained. Breakage in the molded product and damage in the mold at the time of releasing were not observed. The molded product was colorless and transparent. An ultraviolet-visible light spectrum of the obtained molded product was measured using a spectrophotometer UV-1600 (manufactured by Shimadzu Corporation). The evaluation results are shown in Table-1.

### [Example 2]

A molded product was obtained in the same manner as in Example 1 except that 0. 03 parts by weight of ZelecUN (manufactured by Stepan Company) was used instead of 0.05 parts by weight of ZelecUN. Breakage in the molded product and damage in the mold at the time of releasing were not observed. The molded product was colorless and transparent. An ultraviolet-visible light spectrum of the obtained molded product was measured using a spectrophotometer UV-1600 (manufactured by Shimadzu Corporation). The evaluation results are shown in Table-1.

### [Example 3]

0.03 parts by weight of ZelecUN (manufactured by Stepan Company, an acidic phosphoric ester represented by General Formula (1)), 0.8 parts by weight of
2-(2-hydroxy-3-t-butyl-5-methylphenyl)-chlorobenzotriazole (manufactured by BASF Corp., TINUVIN326: maximum absorption wavelength of 352 nm), and 56.1 parts by weight of isophorone diisocyanate were mixed by stirring at 20°C, whereby a homogeneous solution was obtained. 43.9 parts by weight of
4-mercaptomethyl-1,8-dimercapto-3,6-dithiaoctane and 0.15 parts by weight of dimethyl tin (II) dichloride were added to the homogeneous solution, and the resultant product was mixed by stirring at 20°C, whereby a mixed solution was obtained. The mixed solution was defoamed at 600 Pa for 1 hour, then, filtered using a PTFE filter having a pore size of 1 µm, and injected into a mold. This mold was put into a polymerization oven, and heated from 25°C to 130°C for 16 hours to polymerize the solution. After polymerization, the mold was taken out from the oven and cooled, and the resultant product was released from the mold, whereby a molded product was obtained. Breakage in the molded product and damage in the mold at the time of releasing were not observed. The molded product was colorless and transparent. An ultraviolet-visible light spectrum of the obtained molded product was measured using a spectrophotometer UV-1600 (manufactured by Shimadzu Corporation). The evaluation results are shown in Table-1.

### [Example 4]

0.05 parts by weight of ZelecUN (manufactured by Stepan Company, an acidic phosphoric ester represented by General Formula (1)), 0.8 parts by weight of
2-(2-hydroxy-3-t-butyl-5-methylphenyl)-chlorobenzotriazole (manufactured by BASF Corp., TINUVIN326: maximum absorption
wavelength of 352 nm), 45.7 parts by weight of isophorone diisocyanate, and 9.1 parts by weight of hexamethylene diisocyanate were mixed by stirring at 20°C, whereby a homogeneous solution was obtained. 45.2 parts by weight of
4-mercaptomethyl-1,8-dimercapto-3,6-dithiaoctane and 0.15 parts by weight of dimethyl tin (II) dichloride were added to the homogeneous solution, and the resultant product was mixed by stirring at 20°C, whereby a mixed solution was obtained. The mixed solution was
defoamed at 600 Pa for 1 hour, then, filtered using a PTFE filter having a pore size of 1 µm, and injected into a mold. This mold was put into a polymerization oven, and heated from 25°C to 130°C for 16 hours to polymerize the solution. After polymerization, the mold was taken out from the oven and cooled, and the resultant product was released from the mold, whereby a molded product was obtained. Breakage in the molded product and damage in the mold at the time of releasing were not observed. The molded product was colorless and transparent.

An ultraviolet-visible light spectrum of the obtained molded product was measured using a spectrophotometer UV-1600 (manufactured by Shimadzu Corporation). The evaluation results are shown in Table-1.

### [Comparative Example 1]

0.05 parts by weight of ZelecUN (manufactured by Stepan Company, an acidic phosphoric ester represented by General Formula (1)), 1.0 part by weight of
2-(2-hydroxy-3-t-butyl-5-methylphenyl)-chlorobenzotriazole (manufactured by BASF Corp., TINUVIN326: maximum absorption wavelength of 352 nm), and 54.3 parts by weight of a mixture of 2,5-bis(isocyanatomethyl)-bicyclo[2,2,1] heptane and 2,6-bis (isocyanatomethyl)-bicycle[2,2,1] heptane were mixed by stirring at 20°C, whereby a homogeneous solution was obtained. 45.7 parts by weight of 4-mercaptomethyl-1,8-dimercapto-3,6-dithiaoctane and
0.05 parts by weight of dimethyl tin(II) dichloride were added to the homogeneous solution, and the resultant product was mixed by stirring at 20°C, whereby a mixed solution was obtained. The mixed solution was defoamed at 600 Pa for 1 hour, then, filtered using a PTFE filter having a pore size of 1 µm, and injected into a mold. This mold was put into a polymerization oven, and heated from 25°C to 130°C for 16 hours to polymerize the solution. After
polymerization, the mold was taken out from the oven and cooled, and the resultant product was released from the mold, whereby a molded product was obtained. Damage in the glass mold at the time of releasing was observed.

### [Comparative Example 2]

0.05 parts by weight of ZelecUN (manufactured by Stepan Company, an acidic phosphoric ester represented by General Formula (1)), 0.5 parts by weight of
2-(2-hydroxy-3-t-butyl-5-methylphenyl)-chlorobenzotriazole (manufactured by BASF Corp., TINUVIN326: maximum absorption wavelength of 352 nm), and 52.0 parts by weight of m-xylene diisocyanate were mixed by stirring at 20°C, whereby a homogeneous solution was obtained. 48.0 parts by weight of
4-mercaptomethyl-1,8-dimercapto-3,6-dithiaoctane and 0.015 parts by weight of dibutyl tin (II) dichloride were added to the homogeneous solution, and the resultant product was mixed by stirring at 20°C, whereby a mixed solution was obtained. The mixed solution was
defoamed at 600 Pa for 1 hour, then, filtered using a PTFE filter having a pore size of 1 µm, and injected into a mold. This mold was put into a polymerization oven, and heated from 25°C to 130°C for 16 hours to polymerize the solution. After polymerization, the mold was taken out from the oven and cooled, and the resultant product was released from the mold, whereby a molded product was obtained. Damage in the glass mold at the time of releasing was observed.

**[Table 1]**

| | Monomer 1 | Monomer 2 | Monomer 3 | Amount of release agent added | Ultraviolet absorber | Amount of ultraviolet absorber added | 410 nm (transmittance of 10% or less) | 420 nm (transmittance of 70% or less) | 440 nm (transmittance of 80% or more) |
|---|---|---|---|---|---|---|---|---|---|
| Example 1 | m-1 | m-2 | | 500 ppm | | 11000 ppm | 0.1 | 13.2 | 85.3 |
| Example 2 | m-1 | m-2 | | 300 ppm | TINUVIN326 | 11000 ppm | 0.1 | 13.2 | 85.2 |
| Example 3 | m-1 | m-3 | m-4 | 300 ppm | | 8000 ppm | 0.1 | 17.6 | 85.8 |
| Example 4 | m-1 | m-3 | m-4 | 500 ppm | | 8000 ppm | 0.1 | 17.7 | 85.8 |

m-1: 4-mercaptomethyl-1,8-dimercapto-3,6-dithiaoctane
m-2: bis(4-isocyanate cyclohexyl)methane
m-3: isophorone diisocyanate
m-4: hexamethylene diisocyanate

From the results of Examples 1 to 4 and Comparative Examples 1 and 2, the polymerizable composition for optical materials obtained by mixing a polyisocyanate compound including a predetermined amount of secondary isocyanate group and a polythiol compound could be easily released even when the curvature radius thereof is 30 mm ≤ R ≤ 100 mm. Since damage of the glass mold and the molded product itself could be suppressed, it was possible to improve the productivity.

From the results of Examples 1 to 4, in addition to the above configurations, by using the ultraviolet absorber (D) having the maximum absorption peak in a range of 350 nm to 370 nm, light in a low wavelength region of 400 nm to 420 nm was selectively absorbed. Therefore, it is possible to provide an optical material having an improved shielding effect against blue light.

Priority is claimed on Japanese Patent Application No. 2013-258501, filed on December 13, 2013, International Application No. PCT/JP2014/054971, filed on February 27, 2014, and Japanese Patent Application No. 2014-171788, filed on August 26, 2014, the contents of which are incorporated herein by reference.

The present invention includes the following aspects.
[a1] A polymerizable composition for optical materials including polyisocyanate (A), polythiol (B), and acidic phosphoric ester (C) represented by the following General Formula (1), in which, in a case where the total molar number of isocyanate groups in the polyisocyanate (A) is 100 mol%, a secondary isocyanate group is included in 20 mol% or more and the acidic phosphoric ester (C) is included in an amount of 100 ppm to 700 ppm with respect to the total weight of the polyisocyanate (A) and the polythiol (B). 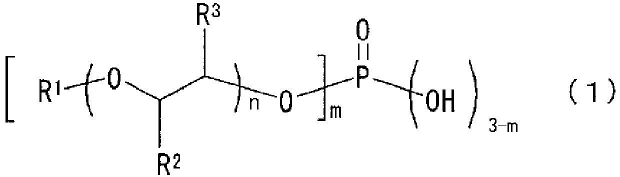 In the formula, m represents an integer of 1 or 2, n represents an integer of 0 to 18, R¹ represents an alkyl group having 1 to 20 carbon atoms, and each of R² and R³ independently represents a hydrogen atom, a methyl group, or an ethyl group.
[a2] The polymerizable composition for optical materials according to [a1], in which the polyisocyanate (A) includes at least one kind selected from bis(4-isocyanatocyclohexyl) methane and isophorone diisocyanate.
[a3] The polymerizable composition for optical materials according to [a1] or [a2], in which the polythiol (B) is at least one kind selected from pentaerythritol tetrakis(2-mercaptoacetate), pentaerythritol tetrakis(3-mercaptopropionate), bis(mercaptoethyl) sulfide, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 2,5-mercaptomethyl-1,4-dithiane, 1,1,3,3-tetrakis(mercaptomethylthio) propane, 4,6-bis(mercaptomethylthio)-1,3-dithiane, 2-(2,2-bis(mercaptomethylthio)ethyl)-1,3-dithietane, and ethylene glycol bis(3-mercaptopropionate).
[a4] A molded product obtained by curing the polymerizable composition for optical materials according to any one of [a1] to [a3].
[a5] An optical material comprised of the molded product according to [a4].
[a6] A plastic eyeglass lens comprised of the optical material according to [a5].
[a7] The plastic eyeglass lens according to [a6], wherein the curvature radius R of at least one surface thereof satisfies the range of 30 mm ≤ R ≤ 100 mm.
[a8] A process for producing optical materials including a step of cast-polymerizing the polymerizable composition for optical materials according to any one of [a1] to [a3].

## Claims

1. A polymerizable composition for optical materials comprising:
polyisocyanate (A);
polythiol (B);
acidic phosphoric ester (C) represented by the following General Formula (1); 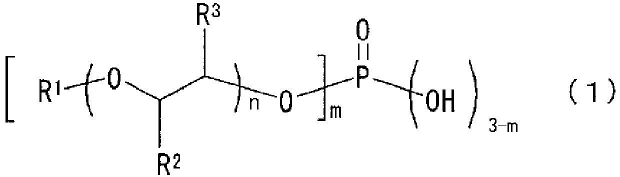
wherein, in the formula, m represents an integer of 1 or 2, n represents an integer of 0 to 18, R¹ represents an alkyl group having 1 to 20 carbon atoms, and each of R² and R³ independently represents a hydrogen atom, a methyl group, or an ethyl group, and
ultraviolet absorber (D) comprised of at least one of ultraviolet absorbers having a maximum absorption peak in a range of 350 nm to 370 nm,
wherein, in a case where the total molar number of isocyanate groups in the polyisocyanate (A) is 100 mol%, a secondary isocyanate group is included in 20 mol% or more and the acidic phosphoric ester (C) is included in an amount of 100 ppm to 700 ppm with respect to the total weight of the polyisocyanate (A) and the polythiol (B).

2. The polymerizable composition for optical materials according to Claim 1,
wherein the ultraviolet absorber (D) is one kind selected from benzotriazole-based compounds.

3. The polymerizable composition for optical materials according to Claim 2,
wherein the benzotriazole-based compound is one kind selected from chloro-substituted benzotriazole-based compounds.

4. The polymerizable composition for optical materials according to Claim 3,
wherein the chloro-substituted benzotriazole-based compound is 2-(2-hydroxy-3-t-butyl-5-methylphenyl)-chlorobenzotriazole.

5. The polymerizable composition for optical materials according to any one of Claims 1 to 4,
wherein 0.1% by weight to 1.5% by weight of the ultraviolet absorber (D) is included in 100% by weight of the polymerizable composition for optical materials.

6. The polymerizable composition for optical materials according to any one of Claims 1 to 5,
wherein the polyisocyanate (A) includes at least one kind selected from bis(4-isocyanatocyclohexyl) methane and isophorone diisocyanate.

7. The polymerizable composition for optical materials according to any one of Claims 1 to 6,
wherein the polythiol (B) is at least one kind selected from pentaerythritol tetrakis(2-mercaptoacetate), pentaerythritol tetrakis(3-mercaptopropionate), bis(mercaptoethyl) sulfide, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 2,5-mercaptomethyl-1,4-dithiane, 1,1,3,3-tetrakis(mercaptomethylthio) propane, 4,6-bis(mercaptomethylthio)-1,3-dithiane, 2-(2,2-bis(mercaptomethylthio)ethyl)-1,3-dithietane, and ethylene glycol bis(3-mercaptopropionate).

8. A molded product obtained by curing the polymerizable composition for optical materials according to any one of Claims 1 to 7.

9. An optical material comprised of the molded product according to Claim 8.

10. The optical material according to Claim 9,
wherein the light transmittance thereof measured at a thickness of 2 mm satisfies the following characteristics (1) to (3) and
wherein (1) the light transmittance at a wavelength of 410 nm is 10% or less,
(2) the light transmittance at a wavelength of 420 nm is 70% or less, and
(3) the light transmittance at a wavelength of 440 nm is 80% or more.

11. A plastic eyeglass lens comprised of the optical material according to Claim 9 or 10.

12. The plastic eyeglass lens according to Claim 11, wherein the curvature radius R of at least one surface thereof satisfies the range of 30 mm ≤ R ≤ 100 mm.

13. A process for producing optical materials comprising:
a step of cast-polymerizing the polymerizable composition for optical materials according to any one of Claims 1 to 7.

14. A process for producing a plastic eyeglass lens, in which a lens casting mold comprised of a first mold having a first surface for forming one side of the plastic eyeglass lens, a second mold having a second surface for forming the other surface, and a material for forming cavity for fixing the first mold and the second mold so as to face these surfaces each other is used, the process comprising:
a step of injecting the polymerizable composition for optical materials according to any one of claims 1 to 7 into the cavity surrounded by the first surface, the second surface, and a material for forming cavity; and
a step of polymerizing and curing the polymerizable composition for optical materials in the cavity,
wherein the curvature radius R of at least one surface of the first surface and the second surface satisfies the range of 30 mm ≤ R ≤ 100 mm.
